# EUROPEAN PATENT APPLICATION

(11) **EP 3 831 204 A1**
(43) Date of publication of application: **09.06.2021**
(21) Application number: 20211187.8
(22) Date of filing: 02.12.2020
(51) Int. Cl.: A01N 25/00, A01N 25/26, A01N 35/02, A01N 43/90, A01P 11/00

(54) **RODENTICIDE BAIT**

(30) Priority: 03.12.2019 IT 201900022827
(71) Applicant: Industrialchimica S.r.l., 35020 Arre (PD) (IT)
(72) Inventor: CAZZARO, Giovanni, 35020 Arre (IT)
(74) Representative: Susanetto, Carlo

(57) **Abstract**

A rodenticide bait (10) comprises a portion (11) including a baiting composition (12) and an active ingredient (13) with a rodenticidal action, a first coating layer (1) which is suitable for coating the portion (11), as well as a second coating layer (2) which is suitable for coating the first coating layer (1).

The first coating layer (1) and the second coating layer (2) comprise a first paraffin and a second paraffin, respectively, having a first melting temperature and a second melting temperature, respectively, in which the first melting temperature is less than the second melting temperature.

## Description

The present invention relates to a rodenticide bait having baiting components that are particularly palatable for the most common murine species. The present invention also relates to a process for preparing the aforementioned rodenticide bait.

It is known that the creation of landfills, sewer systems, and waste deposits by humans has provided sources of supply feeding an ever-expanding world murine population. This phenomenon is accentuated by the remarkable environmental adaptability of the murines.

It is also known that the parasitic life of mice and rats causes a harmful action of pollution of the environment and of human food resources.

In addition to being a hygienic risk factor, rodents are often the cause of the erosion of water, gas, and electricity distribution networks. Moreover, mice and rats are also harmful to farm animals as they cause stress for these animals with a consequent negative impact on their productivity.

Over the years, attempts have been made to counteract the proliferation of mice and rats with various measures.

These measures comprise mechanical solutions such as spring traps, electronic solutions such as sound deterrents, and chemical solutions such as rodenticide baits.

In this context, the invention best suits the sector of rodenticide baits which incorporate a poison and components with a phagocitative baiting action.

The poison comprises an active ingredient with a rodenticidal action such as, for example, an anticoagulant.

The rodenticide effect of this poison is directly proportional to the baiting effect of the bait and therefore to the rodent's satisfaction with the bait. An attempt is therefore made to incorporate highly palatable substances such as fish, fruit, cereals, vegetable oils, sugar, and aromas into the bait.

These ingredients and especially the active ingredient can be subject to rapid deterioration due to atmospheric action and oxidation. Usually, the validity of rodenticide baits currently on the market does not exceed two years from the date of production.

The need is therefore felt to store and preserve the ingredients and the active ingredient of the rodenticide portion as long as the portion is consumed by the rodent.

To meet this need it is known to incorporate preservative substances into the rodenticide bait. However, this measure is not enough. In fact, the bait can be exposed to atmospheric action or in any case to environments with high humidity. Such circumstances accelerate the degradation of the bait ingredients.

To overcome this problem, the use of a type of bait called "paraffinated" has been proposed, in which the poison and the palatable ingredients are mixed with a high paraffin content. This type of bait is manufactured in blocks adapted to be fixed inside suitable containers for baits in order to limit the transport of the blocks outside the containers.

The paraffinated product is preferably used for outdoor use, by virtue of the greater resistance thereof to atmospheric action.

However, the paraffinated product has the drawback of having a modest palatability for rats and mice.

Furthermore, the high quantity of paraffin used in the paraffinated product entails a considerable environmental impact, due both to the production of the paraffin and to the disposal thereof.

Furthermore, the presence of an active ingredient with rodenticidal action on the surface of the paraffinated product increases the health risk associated with the manipulation of this type of bait by operators or inexperienced users.

In order to prevent accidental ingestion of the bait by children and/or pets that may come nearby, it is known to incorporate bittering substances into the bait.

However, this precaution has a modest efficacy in baits which, like the paraffinated product, have albeit minimal doses of the active ingredient with rodenticidal action also on their external surface. In fact, if a child or a pet were to lick this type of baits, they would still risk taking an amount of active ingredient, albeit non-lethal.

An alternative to the paraffinated product is known from French patent FR2974974 which describes a rodenticide portion comprising a food base and an active ingredient with rodenticidal action coated with a coating matrix comprising paraffin.

The paraffin used to coat this type of bait can be subject to softening at temperatures close to body temperature. Therefore, even this type of bait presents the health risk of being limited manipulable.

Another type of bait, defined as "fresh bait", is made up of a floury paste, mixed with animal and vegetable fats to which antioxidants are added to limit the rancidity thereof.

Fresh baits have the disadvantage of being quickly perishable in outdoor environments. Consequently, the fresh baits are preferably used indoors, and are stored inside suitable packaging sachets, made for example of filter paper.

Although fresh baits have a fair palatability for rodents, they have the disadvantage of exuding excessive quantities of oil from the packaging sachets, especially following exposure to high temperatures, as can occur in the containers for baits exposed to solar radiation. This aspect leads to a dispersion of the product to the outside with the consequent possibility of migration of the active ingredient to the outside.

Furthermore, the use of packaging sachets entails a considerable environmental impact due the large amount of energy needed to produce the paper for the sachets.

In this context, operators are therefore required to have in place diversified types of bait as a function of the characteristics of the rodent control operations. In this case, the operators have in place paraffinated products mainly for use in outdoor environments and also have in place fresh baits mainly for use in indoor environments.

It should be noted that, in the present context, the term "baiting composition" means a composition comprising one or more edible compounds appreciated by murine species.

It should also be noted that, in the present context, "paraffin" means a mixture of hydrocarbons, solid at ambient temperature and consisting mainly of linear or branched saturated aliphatic hydrocarbons (alkanes), whose number of carbon atoms ranges from 10 to 60.

The technical problem underlying the present invention is that of providing a rodenticide bait and a process for preparing it, which are structurally and functionally conceived to at least partially obviate one or more of the drawbacks complained of with reference to the cited known art.

This problem is solved by the invention by means of a rodenticide bait and a process for preparing it, carried out in accordance with the attached claims.

According to the invention, this problem is solved by making a rodenticide bait comprising a portion, a first coating layer which is suitable for coating the portion, and a second coating layer which is suitable for coating the first coating layer.

The portion in turn comprises a baiting composition and an active ingredient with rodenticidal action.

Furthermore, the first coating layer and the second coating layer comprise a first paraffin and a second paraffin, respectively.

The first paraffin and the second paraffin have a first melting temperature and a second melting temperature, respectively. In particular, the first paraffin and the second paraffin are selected so that the first melting temperature is less than the second melting temperature.

It will be appreciated that the presence of a first coating layer allows to incorporate the bait and thus guarantee a greater preservation capacity. Moreover, the presence of a first coating layer and also of a second coating layer outside the portion advantageously allows to exclude or at least limit the presence of an active ingredient with rodenticidal action on the external surface of the bait.

In this way an operator can manipulate the rodenticide bait in complete safety, especially during the steps of transport and application of the bait. Furthermore, the bait is also safer for end users and other inexperienced people who may accidentally touch the bait with their bare hands.

The bait is also safer for children and pets who, if they licked the external surface of the bait, would not risk taking an active ingredient with rodenticidal action.

It will be appreciated that, during the manipulation of the bait by an operator, the presence of the second coating layer interposed between the first coating layer and the hands of the operator limits the transfer of heat from the hands of the operator to the first coating layer, thereby preventing a softening of the first coating layer.

In addition, it should be observed that since the second melting temperature is higher than the first melting temperature, the second paraffin advantageously has a second softening temperature higher than a first softening temperature of the first paraffin.

According to a further advantageous aspect, the second softening temperature is higher than the body temperature of an operator who is suitable for manipulating the bait and in particular it is higher than the temperature of the operator's hands.

Consequently, advantageously, the direct or indirect contact between the second coating layer and the hands of the operator does not lead to an increase in the temperature of the second coating layer such as to cause a softening of the second coating layer.

In a further aspect thereof, the invention provides a process for preparing a rodenticide bait.

Said process comprises forming a portion comprising a baiting composition and an active ingredient with rodenticidal action.

Thereafter, it is provided for depositing on the portion a first coating layer which comprises a first paraffin having a first melting temperature. Preferably, it is provided for immersing for a first time period the portion in a first bath comprising the first paraffin at the first melting temperature so as to deposit the first coating layer.

At this point, a second coating layer comprising a second paraffin having a second melting temperature is deposited on the first coating layer. Preferably, it is provided for immersing for a second time period the portion which is coated with the first coating layer in a second bath comprising the second paraffin at the second melting temperature so as to deposit the second coating layer on the first coating layer. It should be noted that the first melting temperature is less than the second melting temperature.

It should be noted that the properties of the active ingredient with rodenticidal action may undergo alterations due to exposure to relatively high temperatures, such as for example the temperatures of a paraffin bath. This problem is solved by the present invention by fractionating the paraffin bath into the first bath at the first temperature for the first time period and into the second bath at the second temperature for the second time period.

This expedient has the advantage of limiting the direct exposure time of the portion to the first melting temperature of the first paraffin. Indeed, the first time period is substantially equal to or less than the second time period. In one aspect, the first time period is between 1 second and 1.5 seconds. According to a further advantageous aspect, the second time period is between 1.5 seconds and 2 seconds.

Furthermore, precisely to limit the direct exposure of the active ingredient to excessive temperatures, the first temperature is selected lower than the second temperature.

After having deposited the second coating layer, it may be advantageous to forcibly cool the second coating layer with air, in order to bring the bait to a temperature suitable for the packaging processes or in order to bring the bait to a temperature suitable for the adhesion of a third coating layer.

Indeed, in some preferred embodiments, it is provided for depositing on said second coating layer a third coating layer. Preferably, it is provided for the immersion for a third time period of the portion which is coated with the first coating layer and with the second coating layer in a third bath in the liquid state at ambient temperature so as to deposit the third coating layer externally on the second coating layer.

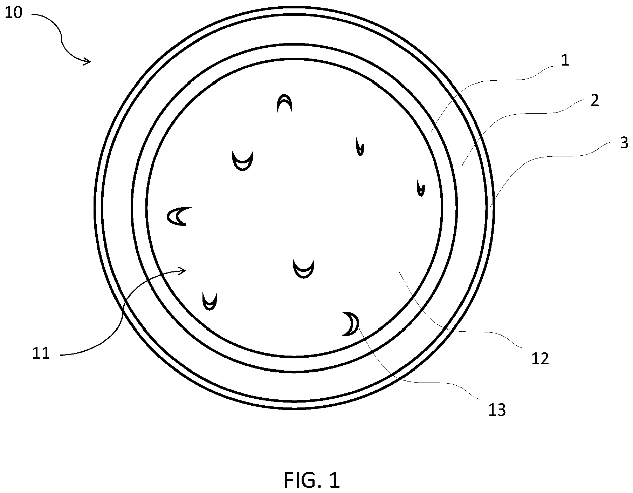

The characteristics and advantages of the invention will become clearer from the detailed description of a preferred embodiment thereof illustrated, by way of non-limiting example, with reference to the drawing of fig. 1 which represents a schematic sectional view of a rodenticide bait made in accordance with the present invention.

In Figure 1 the rodenticide bait in accordance with the invention is indicated as a whole with 10.

The rodenticide bait 10 comprises a portion 11, a first coating layer 1 which is suitable for coating the portion 11, and a second coating layer 2 which is suitable for coating the first coating layer 1.

The portion 11 in turn comprises a baiting composition 12 and an active ingredient with rodenticidal action 13.

Furthermore, the first coating layer 1 and the second coating layer 2 comprise a first paraffin and a second paraffin, respectively.

The first paraffin and the second paraffin have a first melting temperature and a second melting temperature, respectively. In particular, the first paraffin and the second paraffin are selected so that the first melting temperature is less than the second melting temperature. In one aspect, by way of non-limiting indication, the first melting temperature is between 50°C and 60°C. According to a further aspect, the second melting temperature is between 65°C and 70°C.

In preferred embodiments, the active ingredient with rodenticidal action 13 is an anticoagulant, preferably it is an anticoagulant which is effective following a single ingestion. By way of non-limiting example, the active ingredient with rodenticidal action 13 can be chosen from the group consisting of brodifacoum, bromadiolone, difenacoum, coumatetralyl, alpha chlorohydrin and mixtures thereof, or from any first or second generation anticoagulant active ingredient.

In some embodiments, the baiting composition 12 comprises one or more of the following appetizing ingredients, preferably in their respective indicated weight percentages with respect to the total mass of the rodenticide bait.

| | |
|---|---|
| Flour | 50% ∼ 75% |
| Potato starch | 5% ∼ 30% |
| Groats | 5% ∼ 20% |
| Starches | 2% ∼ 4% |
| Yeasts | 1% ∼ 2% |
| Oils | 10% ∼ 15% |
| Sugars | 5% ∼ 10% |
| Aromas | 1% ∼ 2% |

By way of non-limiting example, flours may include soft wheat flours, durum wheat flours, whole flours, bran, and cereal flours such as barley, spelt, corn and oat.

Again, as a simplification, the groats can include durum wheat groats and groats, with different grain sizes.

Yeasts can include both conventional yeast and yeast extract.

Oils can derive from both renewable and non-renewable sources. Preferably, the oils are of vegetable origin and derive from both palm and seed such as for example soybean, sunflower seed, rapeseed, peanut seed, and mixtures thereof.

In preferred embodiments, the first coating layer 1 can have a thickness between 0.1 mm and 0.5 mm. Preferably, the first coating layer 1 can have a thickness between 0.2 mm and 0.4 mm.

Similarly, the second coating layer 2 can have a thickness between 0.3 mm and 0.7 mm. Preferably, the second coating layer 2 can have a thickness between 0.4 mm and 0.6 mm.

In addition to the first paraffin, the first coating layer 1 can comprise a preservative capable of extending the useful life of the portion 11.

In preferred embodiments, the rodenticide bait 10 further comprises a third coating layer 3 which is suitable for coating the second coating layer 2. The third coating layer 3 has the advantageous function of allowing the manipulation of the rodenticide bait 10 by limiting the transfer of heat from the hands of an operator towards the second coating layer 2. Preferably, the third coating layer 3 comprises an acrylic resin or fish glue.

The second coating layer 2 and the third coating layer 3 are external coating layers of the rodenticide bait 10. Advantageously, at least one of said external coating layers can comprise one or more additives, such as for example a dye or an aroma. Preferably, at least one of said external coating layers can also comprise a bittering agent, not perceived by the murine population, suitable for reducing accidental ingestion by pets and/or children.

The presence of a dye in an external coating layer of the rodenticide bait 10 allows the bait 10 to be safely identified with respect to the surrounding environment or with respect to the other baits. Furthermore, the addition of an aroma, preferably an aroma pleasing to murine species, in an external coating layer can selectively induce murine species to consume the bait 10. Moreover, the insertion of a bittering agent, not perceived by the murine population, reduces the risk of accidental ingestion by children and/or pets.

Advantageously, the first coating layer 1, the second coating layer 2 and possibly the third coating layer 3 where present effectively protect the portion 11 from deterioration due to oxidation, humidity, and atmospheric action. It will therefore be appreciated that the rodenticide bait 10 is suitable for use both indoors and outdoors, reducing the expenditure of energy for rodent control operations.

The rodenticide bait 10 is made by means of a preparation process which provides for forming a portion 11 comprising a baiting composition 12 and an active ingredient with a rodenticidal action 13. The portion 11 can be formed by extrusion or by moulding. It will be appreciated that the geometry of the portion 11 and therefore of the rodenticide bait 10 can therefore be dictated by the geometry of an extruder or by the geometry of a mould.

Thereafter, a first coating layer 1 comprising a first paraffin having a first melting temperature is deposited on the portion 11. Preferably, the portion 11 is immersed for a first time period in a first bath comprising the first paraffin at the first melting temperature so as to deposit the first coating layer 1.

At this point, a second coating layer 2 comprising a second paraffin having a second melting temperature is deposited on the first coating layer 1. Preferably, the portion 11 coated with the first coating layer 1 is immersed for a second time period in a second bath comprising the second paraffin at the second melting temperature so as to deposit the second coating layer 2 on the first coating layer 1. It should be noted that the first melting temperature is less than the second melting temperature.

In preferred embodiments, during the process for preparing the rodenticide bait 10, the portion 11 is moved by means of a conveyor belt, preferably at a constant speed.

In one aspect, it is provided that the first bath and the second bath are provided respectively in a first tank and in a second tank, said first tank and said second tank preferably having a rectangular plan.

It must be observed that the conveyor belt is arranged to transport the portion 11 towards the first tank and towards the second tank.

In one embodiment, the conveyor belt can pass in the first tank and/or in the second tank so as to immerse the portion 11 in the first bath and in the second bath, respectively.

In some preferred embodiments, a plurality of suspension means is provided, which are constrained to the conveyor belt and arranged to receive the portions 11. Suspension means (also called "carrier" in the jargon of the sector) mean a device configured to hold suspended a portion 11 for a predetermined time period that is useful for the coating process of the portion 11. By way of non-limiting example, a suspension means may comprise a tweezer.

Advantageously, the portions 11, suspended by means of the suspension means, are moved horizontally above the first tank and above the second tank.

The first tank is then raised so as to immerse the portions 11 suspended above it. After having deposited the first coating layer 1, the first tank is lowered and the portions 11 are moved towards the second tank.

When the portions 11 coated with the first coating layer 1 are suspended above the free surface of the second bath, the second tank is raised so as to immerse the portions 11 in the second bath.

After having deposited the second coating layer 2, the second tank is lowered.

It will be appreciated that the suspension means, or carriers, advantageously allow to hold the portions 11 during immersion in the first bath and in the second bath, preferably avoiding immersing the conveyor belt.

After having deposited the second coating layer 2, it may be advantageous to forcibly cool the second coating layer 2 with air, so as to bring the bait 10 to a temperature suitable for the packaging processes or so as to bring the bait 10 to a temperature suitable for the adhesion of a third coating layer 3.

Indeed, in some preferred embodiments, it is provided for depositing on said second coating layer 2 a third coating layer 3. Preferably, it is provided for the immersion for a third time period of the portion 11 which is coated with the first coating layer 1 and with the second coating layer 2 in a third bath in the liquid state at ambient temperature so as to deposit the third coating layer 3 externally on the second coating layer 2. The third bath preferably comprises acrylic resin or fish glue. The third bath may also comprise a dye or an aroma. In preferred embodiments, the third bath may also comprise a bittering agent, not perceived by the murine population.

Once the third coating layer has been deposited, the rodenticide bait 10 can be released from the suspension means and positioned on a further conveyor belt intended to enter a forced air cooling tunnel. In one aspect, it is provided for keeping the rodenticide bait 10 inside the forced air cooling tunnel for the time period necessary to bring the bait 10 to ambient temperature and/or to the temperature suitable for the packaging processes.

The rodenticide bait according to the invention is particularly suitable for counteracting the proliferation of murine species such as for example *Rattus Norvegicus, Rattus Rattus, Arvicola, Mus Musculus, and others.*

It should be observed that the rodenticide bait is advantageously placed in places frequented by rodents and is renewed before it is completely consumed.

It will be appreciated that the rodenticide bait is suitable for domestic, civil, and industrial use and is suitable for both small and large scale rodent control.

The invention thus solves the problem posed by achieving numerous advantages including:
- a greater safety during use for both operators and end users,
- a longer useful life of the rodenticide bait,
- a lower risk of accidental ingestion by animals and children,
- a lower environmental impact,
- less energy expenditure for rodent control operations.

## Claims

1. A rodenticide bait (10) comprising
• a portion (11) comprising a baiting composition (12) and an active ingredient (13) with a rodenticidal action,
• a first coating layer (1) which is suitable for coating said portion (11),
• a second coating layer (2) which is suitable for coating said first coating layer (1),
said first coating layer (1) and said second coating layer (2) comprising a first paraffin and a second paraffin, respectively, said first paraffin and said second paraffin having a first melting temperature and a second melting temperature, respectively, said first melting temperature being less than said second melting temperature.

2. A rodenticide bait (10) according to claim 1, further comprising a third coating layer (3) which is suitable for coating said second coating layer (2).

3. A rodenticide bait (10) according to claim 2, wherein said third coating layer (3) comprises an acrylic resin or a fish glue.

4. A rodenticide bait (10) according to any one of the preceding claims, further comprising at least one additive selected from a preservative which is contained in said first coating layer (1) and a dye or an aroma or a bittering substance which are contained in said second coating layer (2) or in said third coating layer (3).

5. A rodenticide bait (10) according to any one of the preceding claims, wherein said first melting temperature is between 50°C and 60°C.

6. A rodenticide bait (10) according to any one of the preceding claims, wherein said second melting temperature is between 65°C and 70°C.

7. A rodenticide bait (10) according to any one of the preceding claims, wherein said first coating layer (1) has a thickness between 0.1 mm and 0.5 mm, preferably has a thickness between 0.2 mm and 0.4 mm.

8. A rodenticide bait (10) according to any one of the preceding claims, wherein said second coating layer (2) has a thickness between 0.3 mm and 0.7 mm, preferably has a thickness between 0.4 mm and 0.6 mm.

9. A process for preparing a rodenticide bait (10) comprising:
• forming a portion (11) comprising a baiting composition (12) and an active ingredient (13) with a rodenticidal action,
• depositing on said portion (11) a first coating layer (1) which comprises a first paraffin having a first melting temperature,
• depositing on said first coating layer (1) a second coating layer (2) which comprises a second paraffin having a second melting temperature, said first melting temperature being less than said second melting temperature.

10. A process for preparing a rodenticide bait (10) according to claim 9, comprising:
• immersing for a first time period said portion (11) in a first bath comprising said first paraffin at said first melting temperature so as to deposit said first coating layer (1),
• immersing for a second time period said portion (11) which is coated with said first coating layer (1) in a second bath comprising said second paraffin at said second melting temperature so as to deposit said second coating layer (2) on said first coating layer (1).

11. A process for preparing a rodenticide bait (10) according to claim 9 or claim 10, further comprising forced-air cooling of said second coating layer (2).

12. A process for preparing a rodenticide bait (10) according to any one of claims 9 to 11, further comprising immersion for a third time period of said portion (11) which is coated with said first coating layer (1) and with said second coating layer (2) in a third bath in the liquid state at ambient temperature so as to deposit a third coating layer (3) externally on said second coating layer (2).

13. A process for preparing a rodenticide bait (10) according to any one of claims 10 to 12, wherein said first time period is substantially less than or equal to said second time period.

14. A process for preparing a rodenticide bait (10) according to any one of claims 10 to 13, wherein said first time period is between 1 second and 1.5 seconds.

15. A process for preparing a rodenticide bait (10) according to any one of claims 10 to 14, wherein said second time period is between 1.5 seconds and 2 seconds.
